# EUROPÄISCHE PATENTSCHRIFT

(11) **EP 4 434 141 B1**
(45) Veröffentlichungstag und Bekanntmachung des Hinweises auf die Patenterteilung: **03.09.2025**
(21) Anmeldenummer: 22813269.2
(22) Anmeldetag: 07.11.2022
(51) Int. Cl.: H02K 1/276, H02K 15/03

(54) **ROTOR FÜR EINE ELEKTRISCHE MASCHINE**
ROTOR FOR AN ELECTRIC MACHINE
ROTOR POUR UNE MACHINE ÉLECTRIQUE

(30) Priorität: 18.11.2021 DE 102021212953
(43) Veröffentlichungstag der Anmeldung: 25.09.2024
(73) Patentinhaber: Robert Bosch GmbH, 70442 Stuttgart (DE)
(72) Erfinder: HERZBERGER, Andreas, 71686 Remseck Am Neckar (DE); GAERTNER, Manuel, 71576 Burgstetten (DE); LINDENTHAL, Konstantin, 87544 Blaichach (DE); PRAG, Christian, 70469 Stuttgart (DE); LAHL, Benedikt, 31224 Peine (DE); SCHROEDER, Niklas, 31180 Giesen (DE); LAUE, Harald, 73733 Esslingen (DE); HERZOG, Florian, 87541 Bad Hindelang (DE); HAMMER, Christoph, 71672 Marbach (DE); OETTING, Claus-Christian, 87544 Blaichach (DE)
(86) Internationale Anmeldenummer: PCT/EP2022/080926
(87) Internationale Veröffentlichungsnummer: WO 2023/088708

(56) Entgegenhaltungen:
- WO-A1-2021/225902
- DE-A1- 102015 203 018
- DE-A1- 102019 117 686
- DE-A1- 102019 127 583
- US-A1- 2020 266 677

## Beschreibung

### Stand der Technik

Die Erfindung geht aus von einem Rotor für eine elektrische Maschine nach der Gattung des Hauptanspruchs.

Es ist schon ein Rotor für eine elektrische Maschine aus der US2020266677 A1 bekannt, mit einem um eine Rotorachse drehbaren Rotorkörper umfassend mehrere Rotorpole mit jeweils einer Polmitte, wobei der Rotorkörper einen Rotorgrundkörper aufweist, der an seinem Außenumfang mehrere über den Außenumfang verteilte Vertiefungen aufweist, in die zur Bildung eines der Rotorpole jeweils zwei Magnete und jeweils ein separates Polsegment eingesetzt ist. Zwischen dem jeweiligen Polsegment und der jeweiligen Vertiefung des Rotorgrundkörpers ist jeweils eine V-förmige, U-förmige oder bogenförmige Magnettasche gebildet, die jeweils zwei Taschenöffnungen zum Außenumfang des Rotorkörpers hin aufweist und der Aufnahme der zwei Magnete dient. Der Rotorkörper ist von einer Rotorhülse umschlossen.

### Vorteile der Erfindung

Der erfindungsgemäße Rotor für eine elektrische Maschine mit den kennzeichnenden Merkmalen des Hauptanspruchs hat demgegenüber den Vorteil, dass die Befestigung der Magnete in den Magnettaschen verbessert wird, indem die Rotorhülse eine ausgehärtete Faserverbund-Bandage ist, deren Matrixmaterial bei der Herstellung der Faserverbund-Bandage über die jeweiligen Taschenöffnungen in zumindest eine, insbesondere alle, der Magnettaschen des Rotorkörpers eingedrungen ist zur adhäsiven bzw. stoffschlüssigen Befestigung des jeweiligen Magneten der jeweiligen Magnettasche am Rotorgrundkörper und/oder am jeweiligen Polsegment.

Das noch flüssige, beispielsweise überschüssig dosierte, Matrixmaterial läuft bzw. tropft bei der Herstellung, beispielsweise einem Nasswickelprozess, der Faserverbund-Bandage beispielsweise schwerkraftgetrieben in die jeweilige Magnettasche und/oder wird beispielsweise durch Kapillarwirkung in Spalte gezogen, die zwischen dem jeweiligen Magneten und dem jeweiligen separaten Polsegment oder zwischen dem jeweiligen Magneten und dem Rotorgrundkörper gebildet sind. Durch das Eindringen des Matrixmaterials in die Spalte kann die thermische Anbindung der Magnete an den Rotorgrundkörper und/oder an die Polsegmente und dadurch die Kühlung der Magnete verbessert werden. Außerdem kann das Matrixmaterial die Isolation der Magnete gegenüber dem Rotorkörper verbessern.

Durch die in den Unteransprüchen aufgeführten Maßnahmen sind vorteilhafte Weiterbildungen und Verbesserungen des im Hauptanspruch angegebenen Rotors der elektrischen Maschine möglich.

Besonders vorteilhaft ist, wenn in einer oder mehreren, insbesondere in allen, der Magnettaschen an einer dem jeweiligen Polsegment zugewandten Oberseite des jeweiligen Magnets und/oder an einer der Oberseite gegenüberliegenden Unterseite des jeweiligen Magnets jeweils ein Spalt vorgesehen ist, der zumindest teilweise mit dem Matrixmaterial befüllt ist. Auf diese Weise wird das Matrixmaterial der Faserverbund-Bandage zusätzlich zum Befestigen und Kühlen der Magnete genutzt.

Weiterhin vorteilhaft ist, wenn in der jeweiligen Magnettasche zwischen der Faserverbund-Bandage und einer der Faserverbund-Bandage zugewandten Schmalseite des jeweiligen Magneten ein Abstand vorgesehen ist. Auf diese werden Wirbelströme am Luftspalt vermieden und damit elektromagnetische Verluste verringert.

Sehr vorteilhaft ist es, wenn der zumindest eine Magnet der jeweiligen Magnettasche an einer Fügefläche des Rotorgrundkörpers und/oder an einer Fügefläche des jeweiligen Polsegmentes jeweils mittels einer Klebeverbindung, insbesondere einer Klebebeschichtung oder einer Klebefolie, vorfixiert ist. Auf diese Weise können die Polsegmente am Rotorgrundkörper vorfixiert werden, so dass anschließend das sogenannte Nasswickeln der Faserverbund-Bandage erfolgen kann. Somit ist gewährleistet, dass die Polsegmente und der Rotorgrundkörper beim Nasswickeln eine Einheit bilden. Außerdem wird durch die Klebeverbindung weniger Matrixmaterial zum Auffüllen der Spalte benötigt, so dass das Nasswickeln mit weniger Matrixmaterial durchgeführt werden kann. Außerdem können die Magnete durch die Klebebeschichtung oder Klebefolie der Klebeverbindung vollständig isoliert werden gegenüber den Blechlamellen des Rotorgrundkörpers bzw. des jeweiligen Polsegmentes, so dass weniger elektromagnetische Verluste auftreten.

Auch vorteilhaft ist, wenn die Klebeverbindung eine Struktur, insbesondere eine Oberflächen- und/oder Hohlstruktur, aufweist zum Durchleiten des Matrixmaterials der Faserverbund-Bandage entlang einer Oberfläche des jeweiligen Magneten zur jeweiligen Polmitte hin. Auf diese Weise wird erreicht, dass das Matrixmaterial die Spalte trotz der vorfixierenden Klebeverbindung zumindest teilweise befüllen kann. Beispielsweise werden die Magnete durch das Matrixmaterial ummantelt, was beispielsweise die Isolation der Magnete gegenüber dem Rotorkörper verbessern kann.

Nach einer vorteilhaften Ausführungsform ist vorgesehen, dass die Faserverbund-Bandage magnetisch nichtleitend ausgebildet ist und in dem Matrixmaterial eingebettete Fasern, insbesondere Carbonfasern oder Glasfasern, umfasst. Auf diese Weise erfolgt eine Funktionstrennung im Rotor, wobei der Rotorkörper die Leitung des Magnetflusses und die Faserverbund-Bandage die mechanischen Anforderungen hinsichtlich Drehzahlfestigkeit übernimmt. Die Faserverbund-Bandage ermöglicht den Entfall von Streustegen bzw. -brücken. Außerdem können Luftspalte, die im Stand der Technik aufgrund von Fügetoleranzen beim Fügen der Magnete vorzusehen sind, entfallen.

Vorteilhaft ist, wenn die jeweilige Vertiefung des Rotorgrundkörpers und das jeweilige Polsegment kreissektorförmig ausgebildet ist, da auf diese Weise die V-förmigen, U-förmigen oder bogenförmigen Magnettaschen als schichtförmiger Zwischenraum zwischen dem Rotorgrundkörper und dem jeweiligen Polsegment gebildet werden.

Außerdem vorteilhaft ist, wenn die Schenkel der Magnettasche jeweils unter einem Winkel zur Polmitte angeordnet sind, insbesondere symmetrisch zur Polmitte und insbesondere zum Außenumfang hin divergierend. Auf diese Weise wird eine hinsichtlich Leistung bzw. Wirkungsgrad vorteilhafte Magnetanordnung erzielt.

Nach einer weiteren vorteilhaften Ausführungsform ist vorgesehen, dass der Rotorgrundkörper ein Blechpaket ist und/oder dass das jeweilige Polsegment ein Blechpaket oder ein Soft Magnetic Composite (SMC)-Körper ist. Bei einem Polsegment aus Soft Magnetic Composite (SMC) können Wirbelstromverluste in jede Raumrichtung vermieden werden.

Die Erfindung kann weiterhin eine elektrische Maschine mit einem erfindungsgemäßen Rotor betreffen.

### Zeichnung

Ein Ausführungsbeispiel der Erfindung ist in der Zeichnung vereinfacht dargestellt und in der nachfolgenden Beschreibung näher erläutert.
- Fig.1: zeigt einen erfindungsgemäßen Rotor einer elektrischen Maschine und
- Fig.2: eine Detailansicht des Rotors nach Fig.1.

### Beschreibung des Ausführungsbeispiels

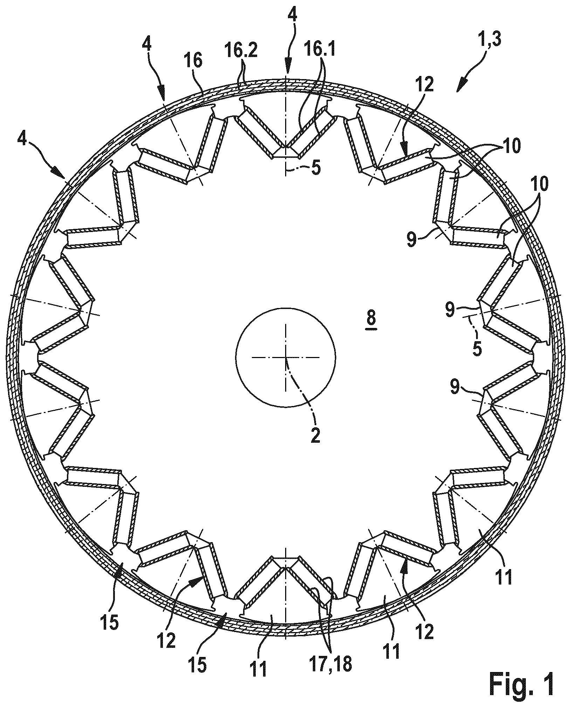

Fig.1 zeigt einen erfindungsgemäßen Rotor für eine elektrische Maschine. Der Rotor 1 der elektrischen Maschine weist einen um eine Rotorachse 2 drehbaren Rotorkörper 3 auf, der mehrere Rotorpole 4 mit jeweils einer Polmitte 5 umfasst.

Der Rotorkörper 3 hat einen Rotorgrundkörper 8, der an seinem Außenumfang mehrere über den Außenumfang verteilte Vertiefungen 9, in die zur Bildung eines der Rotorpole 4 jeweils zumindest ein Magnet 10, beispielsweise zwei Magnete 10 und jeweils ein separates Polsegment 11 eingesetzt ist. Der Magnet 10 ist jeweils beispielsweise ein Permanentmagnet.

Der Rotorgrundkörper 8 ist beispielsweise ein Blechpaket. Das jeweilige Polsegment 11 kann ebenfalls ein Blechpaket oder alternativ ein Soft Magnetic Composite (SMC)-Körper sein.

Zwischen dem jeweiligen Polsegment 11 und der jeweiligen Vertiefung 9 des Rotorgrundkörpers 3 ist eine V-förmige, U-förmige oder bogenförmige Magnettasche 12 gebildet, die jeweils zwei Taschenöffnungen 15 zum Außenumfang des Rotorkörpers 3 hin aufweist und der Aufnahme des zumindest einen Magneten 10 dient. Die jeweilige Vertiefung 9 des Rotorgrundkörpers 8 und das jeweilige Polsegment 11 sind beispielsweise kreissektorförmig ausgeführt.

Die Schenkel der V-förmigen, U-förmigen oder bogenförmigen Magnettasche 12 sind jeweils unter einem Winkel α zur Polmitte 5 angeordnet, beispielsweise symmetrisch zur Polmitte 5 und beispielsweise zum Außenumfang hin divergierend.

Der Rotorkörper 3 ist von einer Rotorhülse 16 umschlossen, insbesondere zur Erhöhung der Drehzahlfestigkeit des Rotors 1. Die Taschenöffnungen 15 sind durch die Rotorhülse 16 verdeckt bzw. überdeckt.

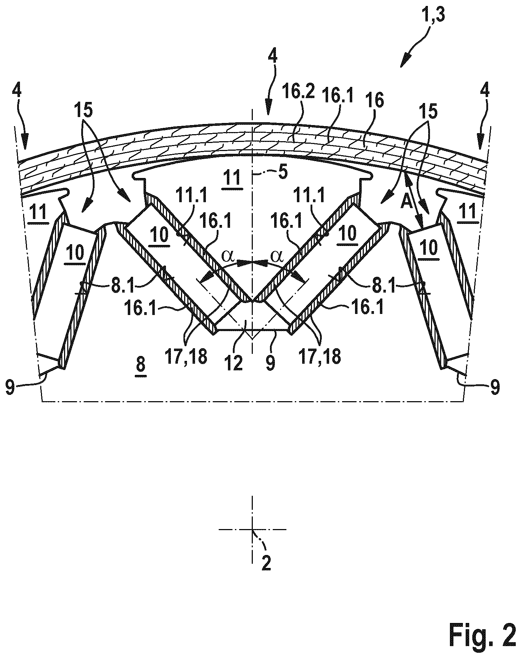

Fig.2 zeigt eine Detailansicht des Rotors nach Fig.1.

Erfindungsgemäß ist vorgesehen, dass die Rotorhülse 16 eine ausgehärtete Faserverbund-Bandage ist, deren Matrixmaterial 16.1 bei der Herstellung der Faserverbund-Bandage 16 über die jeweiligen Taschenöffnungen 15 in zumindest eine, insbesondere alle, der Magnettaschen 12 des Rotorkörpers 3 eingedrungen ist zur Befestigung des jeweiligen Magneten 10 der jeweiligen Magnettasche 12 am Rotorgrundkörper 8 und/oder am jeweiligen Polsegment 11.

Das noch flüssige, beispielsweise überschüssig dosierte, Matrixmaterial läuft bzw. tropft bei der Herstellung, beispielsweise einem Nasswickelprozess, der Faserverbund-Bandage 16 beispielsweise schwerkraftgetrieben und/oder durch eine Kapillarwirkung in die jeweilige Magnettasche 12. Beim Nasswickeln der Faserverbund-Bandage wird eine mit dem Matrixmaterial 16.1 benetzte Faser auf den Rotorkörper 3 gewickelt unter Bildung einer Faserwicklung mit beispielsweise mehreren Wickellagen. Die oberen Wickellagen des sich bildenden Faserverbunds tragen durch entsprechenden Druck auf darunterliegende Wickellagen dazu bei, das Matrixmaterial 16.1 in Richtung der Magnettaschen 12 zu drücken.

Die Aushärtung des Matrixmaterials 16.1 kann bei der Herstellung der Faserverbund-Bandage 16 beispielsweise mittels von UV-Strahlung zur Voraushärtung und mittels von Wärme zur vollständigen Aushärtung erfolgen.

Die Faserverbund-Bandage 16 ist magnetisch nichtleitend ausgebildet und umfasst in dem Matrixmaterial 16.1 eingebettete Fasern 16.2, beispielsweise Carbonfasern oder Glasfasern. Das jeweilige Polsegment 11 ist mittels des Matrixmaterials 16.1 der Faserverbund-Bandage 16 mittelbar über den zumindest einen Magneten 10 streusteglos am Rotorgrundkörper 8 befestigt.

In einer oder mehreren, insbesondere in allen, der Magnettaschen 12 ist an einer dem jeweiligen Polsegment 11 zugewandten Oberseite des jeweiligen Magnets 10 und/oder an einer der Oberseite gegenüberliegenden Unterseite des jeweiligen Magnets 10 jeweils ein Spalt 17 vorgesehen, der zumindest teilweise mit dem Matrixmaterial 16.1 befüllt ist.

In der jeweiligen Magnettasche 12 ist zwischen der Faserverbund-Bandage 16 und einer der Faserverbund-Bandage 16 zugewandten Schmalseite des jeweiligen Magneten 10 ein Abstand A vorgesehen.

Der zumindest eine Magnet 10 der jeweiligen Magnettasche 12 ist an einer Fügefläche 8.1 des Rotorgrundkörpers 8 und/oder an einer Fügefläche 11.1 des jeweiligen Polsegmentes 11 jeweils mittels einer Klebeverbindung 18, beispielsweise einer doppelseitig klebenden Klebebeschichtung oder einer Klebefolie, vorfixiert oder angeheftet. Die Klebeverbindung 18 kann beispielsweise eine Struktur, insbesondere eine Oberflächen- und/oder Hohlstruktur, haben zum Durchleiten des Matrixmaterials 16.1 der Faserverbund-Bandage 16 entlang einer Oberfläche des jeweiligen Magneten 10 zur jeweiligen Polmitte 5 hin.

## Patentansprüche

1. Rotor (1) für eine elektrische Maschine mit einem um eine Rotorachse (2) drehbaren Rotorkörper (3) umfassend mehrere Rotorpole (4) mit jeweils einer Polmitte (5), wobei der Rotorkörper (3) einen Rotorgrundkörper (8) aufweist, der an seinem Außenumfang mehrere über den Außenumfang verteilte Vertiefungen (9) aufweist, in die zur Bildung eines der Rotorpole (4) jeweils zumindest ein Magnet (10), insbesondere Permanentmagnet, und jeweils ein separates Polsegment (11) eingesetzt ist, wobei zwischen dem jeweiligen Polsegment (11) und der jeweiligen Vertiefung (9) des Rotorgrundkörpers (8) eine V-förmige, U-förmige oder bogenförmige Magnettasche (12) gebildet ist, die jeweils zwei Taschenöffnungen (15) zum Außenumfang des Rotorkörpers (3) hin aufweist und der Aufnahme des zumindest einen Magneten (10) dient, wobei der Rotorkörper (3) von einer Rotorhülse (16) umschlossen ist,
**dadurch gekennzeichnet, dass**
die Rotorhülse (16) eine ausgehärtete Faserverbund-Bandage ist, deren Matrixmaterial (16.1) bei der Herstellung der Faserverbund-Bandage (16) über die jeweiligen Taschenöffnungen (15) in zumindest eine, insbesondere alle, der Magnettaschen (12) des Rotorkörpers (3) eingedrungen ist zur Befestigung des jeweiligen Magneten (10) der jeweiligen Magnettasche (12) am Rotorgrundkörper (8) und/oder am jeweiligen Polsegment (11).

2. Rotor nach Anspruch 1, **dadurch gekennzeichnet, dass** in einer oder mehreren, insbesondere in allen, der Magnettaschen (12) an einer dem jeweiligen Polsegment (11) zugewandten Oberseite des jeweiligen Magnets (10) und/oder an einer der Oberseite gegenüberliegenden Unterseite des jeweiligen Magnets (10) jeweils ein Spalt (17) vorgesehen ist, der zumindest teilweise mit dem Matrixmaterial (16.1) befüllt ist.

3. Rotor nach einem der vorhergehenden Ansprüche, **dadurch gekennzeichnet, dass** in der jeweiligen Magnettasche (12) zwischen der Faserverbund-Bandage (16) und einer der Faserverbund-Bandage (16) zugewandten Schmalseite des jeweiligen Magneten (10) ein Abstand (A) vorgesehen ist.

4. Rotor nach einem der vorhergehenden Ansprüche, **dadurch gekennzeichnet, dass** der zumindest eine Magnet (10) der jeweiligen Magnettasche (12) an einer Fügefläche (8.1) des Rotorgrundkörpers (8) und/oder an einer Fügefläche (11.1) des jeweiligen Polsegmentes (11) jeweils mittels einer Klebeverbindung (18), insbesondere einer Klebebeschichtung oder einer Klebefolie, vorfixiert ist.

5. Rotor nach Anspruch 4, **dadurch gekennzeichnet, dass** die Klebeverbindung (18) eine Struktur, insbesondere eine Oberflächen- und/oder Hohlstruktur, aufweist zum Durchleiten des Matrixmaterials (16.1) der Faserverbund-Bandage (16) entlang einer Oberfläche des jeweiligen Magneten (10) zur jeweiligen Polmitte (5) hin.

6. Rotor nach einem der vorhergehenden Ansprüche, **dadurch gekennzeichnet, dass** die Faserverbund-Bandage (16) magnetisch nichtleitend ausgebildet ist und in dem Matrixmaterial (16.1) eingebettete Fasern (16.2), insbesondere Carbonfasern oder Glasfasern, umfasst.

7. Rotor nach einem der vorhergehenden Ansprüche, **dadurch gekennzeichnet, dass** die jeweilige Vertiefung (9) des Rotorgrundkörpers (8) und das jeweilige Polsegment (11) kreissektorförmig ausgebildet ist.

8. Rotor nach einem der vorhergehenden Ansprüche, **dadurch gekennzeichnet, dass** die Schenkel der Magnettasche (12) jeweils unter einem Winkel (α) zur Polmitte (5) angeordnet sind, insbesondere symmetrisch zur Polmitte (5) und insbesondere zum Außenumfang hin divergierend.

9. Rotor nach einem der vorhergehenden Ansprüche, **dadurch gekennzeichnet, dass** der Rotorgrundkörper (8) ein Blechpaket ist und/oder dass das jeweilige Polsegment (11) ein Blechpaket oder ein Soft Magnetic Composite (SMC)-Körper ist.

10. Elektrische Maschine mit einem Rotor (1) nach einem der vorhergehenden Ansprüche.

## Claims

1. Rotor (1) for an electric machine, having a rotor body (3) rotatable about a rotor axis (2) and comprising a plurality of rotor poles (4) each with a pole centre (5), wherein the rotor body (3) has a rotor main body (8) which, at its outer periphery, has a plurality of recesses (9), which are distributed over the outer periphery and into each of which at least one magnet (10), in particular permanent magnet, and a separate pole segment (11) are inserted in order to form one of the rotor poles (4), wherein a V-shaped, U-shaped or arcuate magnet pocket (12) is formed between the respective pole segment (11) and the respective recess (9) of the rotor main body (8), the magnet pockets each having two pocket openings (15) towards the outer periphery of the rotor body (3) and serving to receive the at least one magnet (10), wherein the rotor body (3) is enclosed by a rotor sleeve (16),
**characterized in that**
the rotor sleeve (16) is a cured fibre-composite bandage, the matrix material (16.1) of which, during the production of the fibre-composite bandage (16), is introduced via the respective pocket openings (15) into at least one, in particular all, of the magnet pockets (12) of the rotor body (3) in order to fasten the respective magnet (10) of the respective magnet pocket (12) to the rotor main body (8) and/or to the respective pole segment (11).

2. Rotor according to Claim 1, **characterized in that** a respective gap (17), which is at least partially filled with the matrix material (16.1), is provided in one or more, in particular in all, of the magnet pockets (12) on a top side of the respective magnet (10), the top side facing the respective pole segment (11), and/or on a bottom side of the respective magnet (10), the bottom side being situated opposite the top side.

3. Rotor according to any of the preceding claims, **characterized in that** a distance (A) is provided in the respective magnet pocket (12) between the fibre-composite bandage (16) and a narrow side of the respective magnet (10), the narrow side facing the fibre-composite bandage (16).

4. Rotor according to any of the preceding claims, **characterized in that** the at least one magnet (10) of the respective magnet pocket (12) is pre-fixed to a joining surface (8.1) of the rotor main body (8) and/or to a joining surface (11.1) of the respective pole segment (11) by means of an adhesive connection (18), in particular an adhesive coating or an adhesive film, in each case.

5. Rotor according to Claim 4, **characterized in that** the adhesive connection (18) has a structure, in particular a surface and/or hollow structure, for passage of the matrix material (16.1) of the fibre-composite bandage (16) along a surface of the respective magnet (10) to the respective pole centre (5).

6. Rotor according to any of the preceding claims, **characterized in that** the fibre-composite bandage (16) is magnetically impermeable and comprises fibres (16.2), in particular carbon fibres or glass fibres, embedded in the matrix material (16.1).

7. Rotor according to any of the preceding claims, **characterized in that** the respective recess (9) of the rotor main body (8) and the respective pole segment (11) are in the form of a sector of a circle.

8. Rotor according to any of the preceding claims, **characterized in that** the limbs of the magnet pocket (12) are each arranged at an angle (α) in relation to the pole centre (5), in particular symmetrically in relation to the pole centre (5) and in particular diverging towards the outer periphery.

9. Rotor according to any of the preceding claims, **characterized in that** the rotor main body (8) is a laminated core and/or **in that** the respective pole segment (11) is a laminated core or a soft-magnetic composite (SMC) body.

10. Electric machine having a rotor (1) according to any of the preceding claims.

## Revendications

1. Rotor (1) pour une machine électrique ayant un corps de rotor (3) rotatif autour d'un axe de rotor (2) comprenant plusieurs pôles de rotor (4) ayant chacun un milieu de pôle (5), le corps de rotor (3) comportant un corps de base de rotor (8) qui présente à sa circonférence extérieure plusieurs cavités (9) réparties sur la circonférence extérieure, dans lesquelles est inséré, pour la formation de l'un des pôles de rotor (4), au moins un aimant (10), en particulier un aimant permanent, et un segment de pôle (11) respectif séparé, une poche à aimant (12) en forme de V, en U ou en forme d'arc étant formée entre le segment de pôle (11) respectif et la cavité (9) respective du corps de base de rotor (8), laquelle poche présente respectivement deux ouvertures de poche (15) vers la circonférence extérieure du corps de rotor (3) et sert à recevoir l'au moins un aimant (10), le corps de rotor (3) étant entouré par une douille de rotor (16),
**caractérisé en ce que**
la douille de rotor (16) est une bande de composite fibreux durcie, dont le matériau matriciel (16.1) a pénétré, lors de la fabrication de la bande de composite fibreux (16), par l'intermédiaire des ouvertures de poche (15) respectives dans au moins l'une, en particulier la totalité, des poches à aimant (12) du corps de rotor (3) pour la fixation de l'aimant (10) respectif de la poche à aimant (12) respective au corps de base de rotor (8) et/ou au segment de pôle (11) respectif.

2. Rotor selon la revendication 1, **caractérisé en ce que**, dans l'une ou plusieurs, en particulier dans la totalité, des poches à aimant (12), il est respectivement prévu une fente (17) sur une face supérieure de l'aimant (10) respectif, qui est orientée vers le segment de pôle (11) respectif, et/ou sur une face inférieure de l'aimant (10) respectif, qui est opposée à la face supérieure, laquelle fente est au moins partiellement remplie de matériau matriciel (16.1).

3. Rotor selon l'une quelconque des revendications précédentes, **caractérisé en ce que**, dans la poche à aimant (12) respective, une distance (A) est prévue entre la bande de composite fibreux (16) et un côté étroit de l'aimant (10) respectif orienté vers la bande de composite fibreux (16).

4. Rotor selon l'une quelconque des revendications précédentes, **caractérisé en ce que** l'au moins un aimant (10) de la poche à aimant (12) respective est préfixé au moyen d'une liaison adhésive (18), en particulier un revêtement adhésif ou un film adhésif, sur une surface de jonction (8.1) du corps de base de rotor (8) et/ou sur une surface de jonction (11.1) du segment de pôle (11) respectif.

5. Rotor selon la revendication 4, **caractérisé en ce que** la liaison adhésive (18) présente une structure, en particulier une structure de surface et/ou une structure creuse, pour le passage du matériau matriciel (16.1) de la bande de composite fibreux (16) le long d'une surface de l'aimant (10) respectif vers le milieu de pôle (5) respectif.

6. Rotor selon l'une quelconque des revendications précédentes, **caractérisé en ce que** la bande de composite fibreux (16) est conçue sous une forme non magnétiquement conductrice et comprend des fibres (16.2), en particulier des fibres de carbone ou des fibres de verre, noyées dans le matériau matriciel (16.1).

7. Rotor selon l'une quelconque des revendications précédentes, **caractérisé en ce que** la cavité (9) respective du corps de base de rotor (8) et le segment de pôle (11) respectif sont en forme de secteur de cercle.

8. Rotor selon l'une quelconque des revendications précédentes, **caractérisé en ce que** les pattes de la poche à aimant (12) sont respectivement agencées selon un angle (α) par rapport au milieu de pôle (5), en particulier symétriquement par rapport au milieu de pôle (5) et en particulier, de manière divergente vers la circonférence extérieure.

9. Rotor selon l'une quelconque des revendications précédentes, **caractérisé en ce que** le corps de base de rotor (8) est un paquet de tôles et/ou **en ce que** le segment de pôle (11) respectif est un paquet de tôles ou un corps en matériau composite magnétique doux (SMC).

10. Machine électrique comprenant un rotor (1) selon l'une quelconque des revendications précédentes.
